# EUROPEAN PATENT APPLICATION

(11) **EP 2 043 296 A1**
(43) Date of publication of application: **01.04.2009**
(21) Application number: 06768167.6
(22) Date of filing: 13.07.2006
(51) Int. Cl.: H04L 12/22, H04L 9/32, H04L 12/66, H04L 29/06

(54) **RELAY DEVICE**

(71) Applicant: Ogawa, Keiko, Tokyo 116-0012 (JP)
(72) Inventor: OGAWA, Keiko, Arakawa-ku, Tokyo 1160012 (JP); OZAKI, Hirotsugu, Tokyo, 1700005 (JP)
(74) Representative: Jackson, Martin Peter
(86) International application number: PCT/JP2006/313953
(87) International publication number: WO 2008/007432

(57) **Abstract**

"Leakage" and "falsifying", further "masquerading", "approach" or "attack" of data on the Internet are prevented in a communication between a personal computer and the outside thereof without any burden such as installing software or hardware in the personal computer. For the realization thereof according to the present invention, an intermediary apparatus 100 includes NIC (Network Interface Card) drivers 1a, 1b connected to networks 200, 300 respectively and a network layer and a transport layer which include "TCP/IP" 2 defining a communication method for communicating while carrying out routing (ROUTING) between any two nodes and is provided for a physical layer and a data-link layer including the NIC drivers 1a, 1b. Between the data-link layer and network layer, the function of "TCP2" 3 previously proposed by the inventors of the present application is provided.

## Description

### TECHNICAL FIELD

The present invention relates to an intermediary apparatus suitable to be used, for example, when carrying out communication of computerized information by adding an encryption function to a TCP or UDP protocol positioned in a transport layer. In more detail, the present invention relates to a security system in communication and more particularly to an apparatus for preventing data "leakage" and "falsifying" and further "masquerading", "approach" or "attack" on the Internet.

### BACKGROUND ART

The inventors of the present application previously proposed a novel encryption system TCP2 (WO 2005/015827 A1: hereinafter referred to as Patent Document 1) in which in order to strengthen functions of preventing data leakage, falsifying, masquerading, approach and attack without changing a program of an application of upper layers, encryption and decryption logic arrangement is carried out on the transmission side and on the reception side and then applied to a payload of a protocol which corresponds to TCP or UDP existing in a transport layer.

In recent years, communication utilizing the Internet has been spreading and expanding rapidly in society, because anybody who has at least a Windows personal computer can access a computer on a network only by connecting it to the network. On the other hand, the social problem has become large being accompanied by the spread and expansion of Internet communication where a hacker or a cracker invades a computer system of other people to silently look at software and data and to carry out falsifying or breakdown thereof.

Speaking of a specific case of unjustified disturbance, first, there is a system disturbance due to a large amount of messages transmitted through the network for disturbing the operation of the computer system so that the central system may not be used. When the host becomes overloaded owing to this disturbance, the system may go down.

Also, there is an unjustified disturbance of "unauthorized access and masquerading" by acquiring a password in the host for stealing confidential information, carrying out falsifying and breakdown of information and the like. There is an ugly case in this disturbance such that information possessed by the computer is rewritten without permission so as to deceive a person. Further, also an unjustified activity caused by spy-ware occurs where a specific personal computer is secretly invaded and personal confidential data such as mail addresses and passwords are exploited. Also, there is a possibility of so-called wiretapping frequently happened to unjustly sneak a look at database contents in the computer connected to the network as mentioned above.

Also, there may occur an action for stealing personal information intentionally in the site or in the managing source of the server and a crisis such as cyber terrorism by a spy lurking within a company or the like.

Further, unjustified disturbance such as feeding "virus" which is a program causing a failure in computers of other people is increasing recently. The personal computers used at home for mails or the like are infected with such fed virus and when it is connected to computers within a company, the whole computers within the company are infected therewith and/or the virus will breakdown files in the computer and furthermore, the whole network may be down.

Therefore, in a communication on the Internet utilizing a conventional TCP/IP (Transmission Control Protocol/Internet Protocol) or UDP (User Datagram Protocol), encrypted communication called IPsec (IPsec: Security Architecture for Internet Protocol) or SSL (Secure Socket Layer) is utilized as a function for preventing "leakage", "falsifying" or the like of data.

In general, there are common key (also called secret key) cryptograph system and public key cryptograph system in the encrypted communication in which common key cryptograph system is used for the IPsec in many cases. The common key cryptograph system has a feature in that encryption and decryption is faster than that of the public key cryptograph system. The common key cryptograph system used in the IPsec is a system which carries out encryption and decryption with the same key and a key is allowed to be prepared on one of the transmitting and reception sides, where much attention may need so that the contents may not leak to the outside when the key is exchanged, because the common key is used on the reception side and the transmitting side.

The algorithm used in the common key cryptograph system is represented by DES (Data Encryption Standard: common key (secret key) encryption algorithm developed by US IBM company). IPsec also employs the DES for one of encryption algorithms. IPsec was promoted by IETF (Internet Engineer Task Force) for standardization and the feature thereof lies not only in encrypting specific application merely but also in encrypting at an IP level every communication transmitted from the host.

In this manner, it becomes possible for a user to have a secure communication without being conscious of the application. Also, IPsec makes it possible to change the encryption algorithm used without changing its own structure so that IPsec can be used also in the future. A 32 bit code referred to as SPI (Security Pointer Index) is used for the common encryption key used in the IPsec and IKE (Internet Key Exchange) is used for the key exchange protocol. Further, the IPsec is provided with a protocol AH (Authentication Header) for a completeness authentication.

Also, SSL is an HTTP protocol with a security function which was developed by US Netscape Company (merged by AOL at present), and it becomes possible for a client and a server using this to authenticate each other on the network, so that highly confidential information such as credit card information or the like may be encrypted, and then transmitted and received. Accordingly, it is possible to prevent wiretapping of data, retransmission attack (attack by sending wiretapped data on the network many times repeatedly), masquerading (communication by pretending to be another person), falsifying of data and the like.

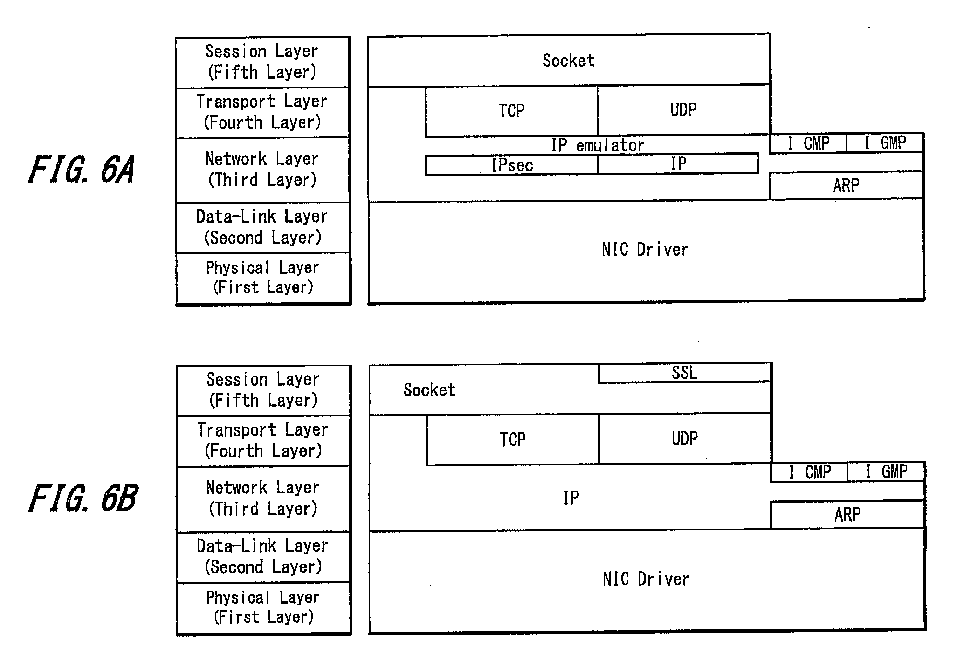

FIG. 6A shows an example of a protocol stack in the case of carrying out an encrypted communication using conventional IPsec and FIG. 6B shows an example of a protocol stack in the case of carrying out an encrypted communication using conventional SSL.

OSI reference model includes: a bottom layer (first layer) that is a physical layer, a second layer that is a data-link layer, a third layer that is a network layer, a fourth layer that is a transport layer, a fifth layer that is a session layer, a sixth layer that is a presentation layer and a top layer (seventh layer) that is an application layer. The seven layers in this OSI reference model are illustrated by dividing a communication function into seven stages and a standard function module is set for each layer. In FIG. 6A, there are shown layers from the bottom to the session layer of the fifth layer. The protocol stack is a software group including protocols selected and stacked for realizing functions in respective layers of the network.

First, the outline with respect to the OSI reference model is described, where the physical layer of the first layer is a layer which defines a physical electric property of the signal line, a modulation method of codes and the like. However, it is rare for this layer alone to be defined and mounted, and typically defined, for example, as an Ethernet standard or the like together with the data-link layer of the second layer.

The data-link layer of the second layer is a layer which defines packetizing of data, physical node addresses, a transmitting and receiving method of packets and the like. This layer is one which defines a protocol for transmitting and receiving packets between two nodes through a physical communication medium, where some kind of address is added to each node and a receiver of the packets is specified based on the address, thereby transmitting packets on the communication medium.

Various types of communication mediums such as copper wiring, wireless, optical fiber and the like are used. Also, with respect to the connection mode (topology), there is not only one-to-one opposing connection but also many types such as bus connection, star connection, ring connection and other connection types. The packet transmitted on the communication medium is received by a node when reached to the node on the reception side and is further sent to an upper protocol layer.

A NIC (Network Interface Card) driver arranged over the physical layer and the data-link layer is an add-in board for connecting a personal computer, a printer or the like to a local network (LAN). In the case of referring merely to a network card, it is connected to Ethernet in many cases.

By means of this NIC driver, a node (apparatus), which desires to transmit data, observes an availability of a cable and starts data transmission when the cable is available. At that time, if a plurality of nodes start transmission simultaneously, data may collide in the cable and are broken, so that the nodes stop transmission and will again start transmission after a random period of time. As a result, it is possible for a plurality of nodes to share a single cable so as to communicate mutually.

The network layer of the third layer is a layer which defines a communication method between any two nodes. The network layer corresponds to an IP layer in TCP/IP. It is possible for the data-link layer to carry out a communication between nodes on the same network medium and the function of the network layer is to communicate using the function of the data-link layer while carrying out routing between any two nodes existing on the network.

Here, routing means transmission of packets by selecting an optimum path when transmitting the packets to the host intended in the TCP/IP network. For example, it is possible only for nodes on the same segment to communicate each other in the Ethernet, but a communication is carried out in the network layer between two Ethernet segments by routing packets.

Also, packets can be routed, regardless of physical network media, to a dial-up PPP (Point to Point Protocol) line which connects a computer to a network (Ethernet) through a telephone line, an exclusive line using an optical fiber and the like. For this purpose, addresses (IP addresses in the case of TCP/IP) which are not dependent on the physical medium are typically assigned to respective nodes and the routing is carried out based thereupon.

IPsec encrypts every communication in the network layer, in other words, every communication transmitted from the host at an IP level, so that a user can carry out a secure communication without paying attention to the application.

The transport layer of the fourth layer is a layer providing a function for carrying out communication between two processes which are executed on respective nodes and it is a protocol layer. The transport layer corresponds to TCP in TCP/IP. The network layer offers the function of carrying out a communication between two nodes and the function of TCP is to offer a virtual communication path in which there is no error using the function of the network layer between two processes (applications).

More specifically, it is possible to transmit data in the network layer, but there is no guarantee that the data will certainly arrive at a receiving side. Also, there is no guarantee either that the data arrive correctly in the transmitted order. Consequently, TCP offers a communication path with no error in order for the application to use data easily. If it is necessary, TCP again transmits data, recovers data or the like.

UDP is also arranged in the transport layer other than TCP and the difference between UDP and TCP is that UDP is a protocol operating at a high speed but data is not secured while TCP operates at a speed lower than UDP but data is secured. TCP is used in the case where data are mainly transmitted such as the case of a communication between computers and UDP is used frequently in the case where sound and video are transmitted such as the case of IP telephone. This communication system is the one which the inventors of the present application proposed in the Patent Document 1 for the first time.

The session layer of the fifth layer is a layer for defining a procedure of a session (from start to end of a communication) with which a communication condition is prepared by establishing a connection between applications. A socket arranged in this layer means a network address that is a combination of an IP address corresponding to an address of the computer in the network and a port number which is a sub address of the IP address.

In the case of connecting computers, a socket (pair of IP address and port number) is designated. As shown in FIG. 6B, according to SSL which is a conventional representing encrypted communication technology, an encrypted communication is realized in this session layer.

The presentation layer of the sixth layer is a layer for defining expression method, coding, encrypting or the like of the data transmitted and received in the session (start to end of a communication). TCP/IP protocol may not have a portion corresponding to this layer and the stream data processing is typically handled by the application itself.

Also, the application layer of the seventh layer is a layer for defining data transmission and reception between applications and TCP/IP protocol may not have a portion corresponding to this layer. The application layer defines, for example, an electronic mail format, an internal structure of a document or the like which is a common data structure or the like necessary in the case of transmitting and receiving data between applications.

FIG. 6A shows a standard protocol stack including IPsec in which first, an NIC (Network Interface Card) driver is provided in the physical layer (first layer) and the data-link layer (second layer). This driver is an interface card driver for connecting hardware of a computer or the like to a network and is software for data transmission and reception control. For example, a LAN board or a LAN card for connecting to Ethernet corresponds thereto.

In the network layer of the third layer, IP emulator a portion of which extends to the transport layer (fourth layer) exists. The portion extended to the transport layer is not implemented with a function as a transport layer. The portion only provides the function of the network layer to the session layer. IP emulator uses a protocol for carrying out an encrypted communication by IPsec or IP that is a protocol not carrying out an encrypted communication by switching between them depending on the intended use.

Also, ARP (Address Resolution Protocol) is arranged in the network layer of the third layer. ARP is a protocol used for obtaining a MAC (Media Access Control) address, which is a physical address in Ethernet, from an IP address. MAC is a transmission control technology referred to as media access control which is utilized in LAN or the like and is used as a technology for defining a transmitting and receiving method of a frame that is a transmitting and receiving unit of data, a frame format, error correction and the like.

Also, the network layer is provided with an ICMP (Internet Control Message Protocol) which is a protocol for transferring an error message and a control message of IP and with IGMP (Internet Group Management Protocol) for controlling a host group that efficiently distributes the same data to a plurality of hosts and receives the distribution. Then, TCP and UDP are arranged in the transport layer which is an upper layer of the network layer and then, a socket interface is arranged in the session layer which is an upper layer thereof.

FIG. 6B shows an example of a standard protocol including SSL for an encryption processing protocol, where the network layer may not include IPsec, but the socket (session layer) includes SSL. Other protocols are the same as those shown in FIG. 6A.

In conventional representing encrypted communication technologies, IPsec is one for encrypting, transmitting and receiving IP packets, and consequently, there is no need for application software which utilizes upper protocols of TCP, UDP or the like to be aware of a fact that IPsec is used.

On the other hand, a digital certificate which uses RSA (Rivest, Shamir, Adleman: initial letters of three persons who developed a public key cryptograph system) public key cryptograph technology is used in SSL at the level authenticating each other and a common key cryptograph technology such as DES or the like is used for the data encryption. SSL is in the session layer of the fifth layer and dependent on a specific application.

IPsec has been realized having a function of preventing "leakage" and "falsifying" of data in the third layer (network layer) which is lower than the fourth layer (transport layer) with reference to OSI (see R. Atkinson, August 1995, "Security Architecture for the Internet Protocol", RFC1825.). On the other hand, SSL is an encryption technology in the session layer of the fifth layer and used for transmitting and receiving information about privacy, company secret information or the like safely by encrypting data of WWW (World Wide Web), FTP (File Transfer Protocol) or the like which is used widely now on the Internet.

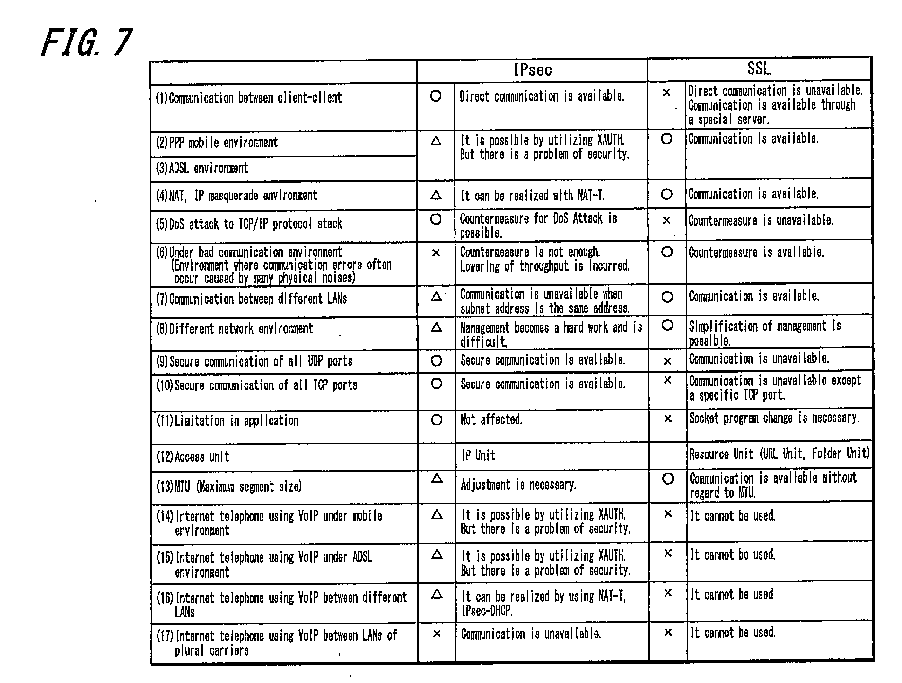

Table 1 shown in FIG. 7 compares and describes functions of IPsec and SSL. As shown in this table, IPsec and SSL have advantages and defects opposite to each other.

For example, in the case of SSL for the client-client communication, its command system and communication content will become a relation between master and servant, in other words, client/server, so that the client-client communication need to be carried out through a server. More specifically, in the case where secret data are sent from a terminal A to a terminal B after encrypting the data using SSL, a server may need to intervene between them. On the other hand, there is no such a restriction in IPsec, so that communication can be carried out directly.

Also, in a PPP (Point to Point Protocol) mobile environment or an ADSL (Asymmetric Digital Subscriber Line) environment, IPsec carries out authentication of a sender/receiver connecting thereto in a communication using an IKE (Internet Key Exchange) protocol which is used for the determination of encryption system, key exchange and bilateral authentication before encrypted data communication is started.

Accordingly, in the case of the PPP mobile environment (remote client) or the ADSL environment, the IP address may not be fixed, so that a main mode of IKE used most between gateways of IPsec, in other words, a mode using IP address information on a sender/receiver of communication for authentication may not be used.

The IP address may not need to be used for ID information when using an aggressive mode in which, for example, user information is used for the ID information so that a sender/receiver is specified using a user password for the known common key. However, in the aggressive mode, the ID of the sender/receiver of communication is transmitted in the same message where key exchange information is transmitted, so that the ID is sent as a plaintext without being encrypted.

Also, the problem on authentication can be solved by utilizing XAUTH (Extended Authentication within IKE), but the IP address is not determined in the access from a remote client, so that all of IKE and IPsec may need to be permitted in a firewall setting, causing security problems to remain. SSL can be used to communicate even under this environment.

Also, there is a problem in IPsec that may not respond to NAT (Network Address Translation) and IP masquerade. In order to respond thereto, other function, for example, of implementing IPsec in a payload of UDP may also be needed.

NAT is a technology for a business organization or the like, in which a plurality of computers are connected to the Internet by sharing one global IP address, and bilaterally-converts an IP address (local address) only for the organization and an address (global address) on the Internet. The reason why IPsec may not respond to NAT is because the IP header is in an authentication range of AH (Authentication Header) and the bilateral conversion from the local address to the global address may not be performed, preventing local addresses in different subnets from communicating with each other.

Also, IP masquerade is a mechanism with which a plurality of clients having private addresses in LAN can access the Internet and, this mechanism is desirable from a view point of security, because only a terminal operating the IP masquerade can be seen from the outside (Internet) when using this mechanism. The reason why IPsec may not respond to IP masquerade is because the ESP (Encapsulating Security Payload: encrypted payload) header of IPsec is positioned immediately after the IP header.

A typical router implemented with IP masquerade determines that a TCP/UDP port number is positioned immediately after the IP header. Accordingly, the port number is changed if going through a router implemented with IP masquerade, so that IPsec determines that data has been altered and the authentication of the host may not be obtained. It is possible to avoid this problem by utilizing a product which supports NAT-T (NAT-Traversal) for placing data onto a payload of UDP.

However, even products supporting NAT-T may not be connected if draft versions of NAT-T are different from each other. It is possible for SSL to communicate even under such an environment.

On the other hand, SSL is helpless against various kinds of attack to TCP/IP by an unjustified invader called a hacker or a cracker on the network, so-called a DoS attack (Denial of Service: attack to stop service). When a DoS attack to the TCP/IP protocol stack, for example, a TCP cutoff attack takes place, the TCP session is cutoff, causing the service of SSL to be stopped.

Since the IPsec is implemented in the third layer (IP layer), the IP layer has a security function so that a DoS attack to TCP/IP (fourth layer, third layer) can be prevented. However, SSL is an encryption protocol implemented in the layer (fifth layer) above the TCP/IP (fourth layer, third layer), so that it is impossible for SSL to prevent a DoS attack to TCP/IP.

Further, SSL is more effective as compared with IPsec in the communication under an inferior communication environment in which physical noise is increased and communication errors occur frequently. More specifically, in the case of detecting an error, IPsec allows the upper TCP to retransmit data. TCP transmits retransmission data to IPsec, but IPsec cannot recognize that the data are retransmitted, so that encryption is again carried out. SSL carries out an error recovering process by TCP, so that the same data may not encrypted again.

Also, communication between different LANs may not be allowed for IPsec. More specifically, distribution of subnet addresses in LAN is managed by a DHCP (Dynamic Host Configuration Protocol) server in the LAN, and the same subnet addresses may not be assigned in the LAN, but there is a possibility in the case of a communication between different LANs that the same addresses are to be assigned, because the DHCP servers existing in the respective LANs assign subnet addresses individually.

In the case where the same addresses are assigned in this manner, communications may not be allowed for IPsec. However, if an IPsec-DHCP server is set up differently and manages such that the same address may not be assigned in different LANs, communication can be carried out. SLL is positioned in the fifth layer (session layer) of the OSI reference model as mentioned above, so that an error recovering process can be performed in TCP of a lower layer and communication under an inferior environment as described above can be carried out.

Also, with respect to the communication under different network environments, IPsec has to manage all of the nodes for passing through and change settings so that the IPsec can pass through, and therefore it is difficult to manage, but it is possible for SSL to carry out a communication even under such environment, regardless of the environment of the nodes to be passed through.

Also, it is not possible for UDP to be encrypted for communication, because SSL may not support UDP communication. It is not possible for all the ports of TCP to be encrypted for communication, because SSL may support only specific ports. On the other hand, it is possible for IPsec to encrypt UDP and TCP for communication.

Further, SSL has a problem of not being compatible with respect to application. Application uses the socket (fifth layer) as a program interface when the Internet communication is carried out. Therefore, in the case where the application uses SSL (fifth layer), this socket interface may need to be changed to SSL interface. Consequently, SSL has no compatibility with respect to application.

On the other hand, IPsec is positioned below the socket (fifth layer), so that the socket (fifth layer) can be used as a program interface directly for the application and therefore IPsec has compatibility with the application. Also, while IPsec carries out control based on an IP address unit, SSL carries out control based on a source unit (URL unit, folder unit).

Further, IPsec has a problem that the maximum segment size is small. More specifically, since IPsec uses an ESP header and an ESP trailer, the payload becomes small, so that fragments (divided packets) are generated and the throughput is lowered. Also, since the fragments are not allowed for the TCP packet, it is necessary in the end-to-end to obtain environment in which IPsec passes and to set a maximum segment size with which fragments may not occur. On the other hand, it is not necessary for SSL to prepare an environment for passing through, so that it is not necessary to set the maximum segment size.

As mentioned above, functions of IPsec and SSL in table 1 (FIG. 7) are described, in which merits and demerits opposite to each other are mixed up in IPsec and SSL. On the other hand, the inventors of the present application proposed previously TCP2 which includes all the merits of the IPsec and SSL and is a novel encrypted communication protocol having many other merits (see Patent Document 1).

More specifically, according to the invention described in the Patent Document 1, it is not necessary to implement "encryption function" for preventing an unjustified invasion to a computer terminal in each of application-programs, consequently, it is not necessary to re-create an application-program itself either, in addition, it is possible to communicate also with a sender/receiver that may not support the aforesaid encryption function by means of a conventional plaintext and further, it is possible to receive the benefit of the encryption and the authentication even under an environment in which IPsec may not be utilized (or situation in which the user may not desire to utilize IPsec).

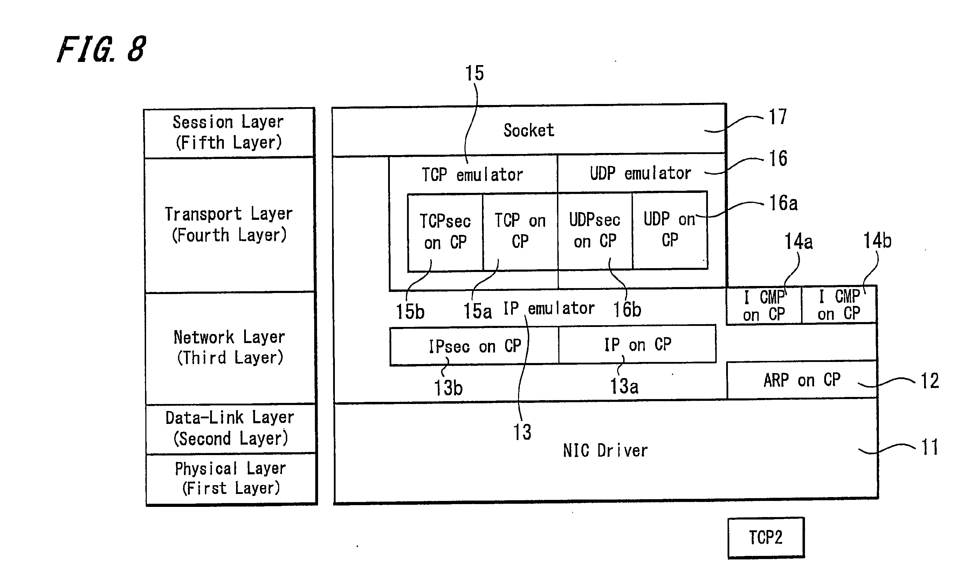

FIG. 8 shows a protocol stack used in an embodiment of an encrypted communication system which the inventor of the present application proposed previously in the Patent Document 1.

The protocol stack used in the invention described in this Patent Document 1 includes, as shown in FIG. 8, a NIC (Network Interface Card) driver 11 arranged as a layer corresponding to a physical layer (first layer) and a data-link layer (second layer) of OSI seven layers. The driver is, as already described, an interface card driver for connecting hardware such as a computer to a network and the content thereof is data transmission and reception control software. For example, a LAN board or a LAN card for connecting hardware to Ethernet corresponds thereto.

An IP emulator (emulator) 13 which is partially extended to a transport layer (fourth layer) is in a network layer of the third layer. The extended portion is not implemented with a transport function. The portion only offers a function of the network layer to a session layer. The IP emulator 13 is to carry out an operation using "IPsec on CP" 13b which is a protocol carrying out an encrypted communication or "IP on CP" 13a by switching between them depending on the intended use. Here, the words "on CP" indicates that a cracking-protector (CP) is observing "approach" and "attack" of an object to be abandoned, cutoff or restricted so as not to pass or that such observation can be carried out by setting thereof.

Also, the network layer is arranged with "ARP on CP (Address Resolution Protocol on Cracking Protector)". The "ARP on CP" is a protocol used for obtaining a MAC (Media Access Control) address, which is a physical address of Ethernet, from an IP address including a protective measure against a cracker. MAC is a transmission control technology utilized in LAN or the like and referred to as a medium access control and is used as a technology for defining a transmitting and receiving method of a frame which is a transmitting and receiving unit of data, a frame format, an error correction or the like.

Here, the IP emulator 13 is software or firmware for allowing various kinds of security functions according to present invention to be matched with a conventional IP periphery stack. More specifically, the IP emulator 13 is software, firmware or hardware (electronic circuit, electronic components) for allowing the various kinds of security functions to be matched with an ICMP (Internet Control Message Protocol) 14a, which is a protocol for transferring an IP error message or a control message, an IGMP (Internet Group Management Protocol) 14b, which is a protocol for controlling a host group efficiently distributing the same data to a plurality of hosts or receiving such data, TCP 15 and UDP 16 and further to a Socket interface 17. The IP emulator 13 may carry out encryption and decryption of IPsec and processing before and after the encryption and decryption such as processing of adding necessary authentication information and authentication.

A TCP emulator 15 and a UDP emulator 16 are arranged in the transport layer (fourth layer) that is a layer above the IP emulator 13. The TCP emulator 15 is configured to carry out an operation using "TCPsec on CP" 15b which is a protocol for carrying out an encryption communication or "TCP on CP" 15a which is an ordinary communication protocol by switching between them depending on the intended use. Similarly, the UDP emulator 16 is configured to carry out an operation using "UDPsec on CP" 16b which is a protocol carrying out an encryption communication and "UDP on CP" 16a which is an ordinary communication protocol by switching between them depending on the intended use.

The most specific feature of Patent Document 1 lies in that the encrypted communication protocols of TCPsec 15b and UDPsec 16b are mounted in the transport layer (fourth layer). TCPsec 15b and UDPsec 16b will be described later on.

A socket interface 17 carrying out data exchange with a protocol of TCP, UDP and the like is provided in an session layer (fifth layer) which is a layer above the transport layer (fourth layer). The socket means a network address, as already described, obtained by combining an IP address corresponding to an address of a computer in a network with a port number which is a sub address of the IP address. Practically, the socket interface 17 is configured with a single software program module carrying out addition or deletion of a series of headers all together (execution program or the like) or a single hardware module (electronic circuit, electronic components or the like).

The socket interface 17 offers a unified access system from a further upper application and is an interface holding similar kinds, types of arguments or the like of conventional one.

The TCP emulator 15 carries out an operation in the transport layer of distributing packets to one of a TCPsec 15b which has a function of preventing data leakage and falsifying, that is, a function of encryption, integrity authentication, authentication or the like and an ordinary protocol TCP 15a which may not have a function of such encryption, integrity authentication, authentication or the like. Also, both the TCPsec 15b and TCP 15a include a cracking-protector (CP), so that it is possible to implement a defending function against "approach" and "attack" by a cracker in the case where any of the protocols is selected. The TCP emulator 15 also serves as an interface with the socket positioned in an upper layer.

Also, as already described, UDP may not have an error compensation function while TCP has an error compensation function, but UDP has a feature of a high transfer speed correspondingly and also a broadcast function. The UDP emulator 16, similarly to the TCP emulator 15, carries out an operation of distributing packets to one of a UDPsec 16b which has a function of preventing data leakage and falsifying, that is, a function of encryption, integrity authentication, authentication or the like and an ordinary protocol UDP 16a which may not have a function of such encryption, integrity authentication, authentication or the like.

As shown in FIG. 8, the protocol stack carrying out encryption processing according to the present invention includes the socket 17, the TCP emulator 15, the UDP emulator 16, the "TCPsec on CP" 15b, the "UDPsec on CP" 16b, the "TCP on CP" 15a, the "UDP on CP" 16a, the "ICMP on CP" 14a, the "IGMP on CP" 14b, the IP emulator 13, the "IP on CP" 13a and the "ARP on CP" 12 and, hereinafter, the protocol stack will be generically called TCP2.

"IPsec on CP" 13b is not necessarily included in TCP2, but it is also possible to include "IPsec on CP" 13b in TCP2.

TCP2 disclosed in the Patent Document 1 includes a standard protocol stack of TCP, UDP, IP, IPsec, ICMP, IGMP and ARP other than the protocol stack for the above-described encryption processing. CP (cracking-protection) is implemented in these standard protocols and respective stacked protocols can be protected from an attack based on the communication and an attack based on an application and program (Trojan Horse, falsifying of a program or unauthorized use of a qualified user).

Also, the TCP emulator 15 is implemented in the TCP2 and the TCP emulator 15 is compatible for the Socket 17 in the session layer and the IP emulator 13 in the network layer, so that the TCP emulator 15 can be externally seen as a standard TCP. Actually, TCP and TCPsec are switched to be executed as a TCP2 function. TCPsec is an encryption and authentication function in the transport layer of the present invention.

Also, the UDP emulator 16 is similarly implemented in TCP2 and the UDP emulator 16 is compatible with a standard UDP for the Socket 17 in the session layer and the IP emulator 13 in the network layer, so that the UDP emulator 16 can be externally seen as a standard UDP. Actually, UDP and UDPsec are switched to be executed as a TCP2 function. UDPsec is encryption and authentication function in the transport layer described in Patent Document 1.

Next, the TCPsec 15b and the UDPsec 16b having a function of preventing "data leakage" which is a particularly important function in TCP2 will be described.

A publicly known secret key (common key) encryption algorithm is used as an encryption and decryption method (algorithm and logic) for the TCPsec 15b and the UDPsec 16b. For example, a DES (Data Encryption Standard) which is a secret key encryption algorithm developed by IBM company in 1960s or a 3DES as its improved version is used.

Further, an IDEA (International Data Encryption Algorithm) published by Mr. James L. Massey and Mr. Xuejia Lai of Swiss Institute of Technology in 1992 is also used for other encryption algorithms. This encryption algorithm has 128 bits for the length of a cryptograph key, because data are encrypted by being divided into a block of 64 bits. It is designed to have enough strength for a linear decryption method or a difference decryption method which efficiently decrypt the secret key cryptograph.

In addition to a cryptograph system such as FEAL (Fast data Encipherment Algorithm), MISTY or AES (Advanced Encryption Standard) used as a cryptograph system for the TCPsec 15b and the UDPsec 16b which are used in the invention disclosed in the Patent Document 1, a secret encryption and decryption algorithm created independently may also be used. Here, FEAL is a cryptograph system developed by Nippon Telegraph and Telephone Corporation (old name at that time) and is a secret-key cryptograph system which uses the same key for the encryption and the decryption. FEAL has an advantage that encryption and decryption are realized at a high speed as compared with DES.

Next, MISTY similarly used in the invention disclosed in the Patent Document 1 is a secret-key cryptograph system developed by Mitsubishi Electric Corporation and data are encrypted by being divided into a block of 64 bits similar to IDEA. The key length is 128 bits. The same program is used for the encryption and the decryption similarly to DES or the like. This system is also designed to have enough strength for a linear decryption method or a difference decryption method which decrypt the secret key cryptograph efficiently.

Also, AES is a next-generation standard encryption system of the U.S. Government being selected by the National Institute of Standards and Technology of the U.S. Department of Commerce and has been developed as a next-generation cryptograph standard replacing DES which is a standard cryptograph system at present. A system called Rijndael developed by Mr. Joan Daemen and Mr. Vincent Rijmen who are Belgium cryptograph developers was selected in October 2000 from cryptograph systems collected from around the world.

In this manner, various kinds of secret key encryption algorithms already known can be employed as a cryptograph system of the TCPsec 15b and the UDPsec 16b applied to the invention disclosed in the Patent Document 1 and moreover, it is possible to utilize a secret key (common key) cryptograph system developed by a user independently.

Further, an authentication algorithm utilizing a public key or pre-shared secret such as MD5 (Message Digest 5), SHA1 (Secure Hash Algorithm 1) is used as an "authentication" and "integrity authentication" method for preventing so-called "masquerading" and "data falsifying" or the like. Also, it is possible to employ an original algorithm utilizing a one-way function in place of such a publicly known authentication algorithm.

MD5 is a hash function (one-way summary function) used for authentication and digital signature in which whether an original text is falsified or not during the communication can be detected by generating a hash value of a fixed length based on the original text and by comparing the values at both ends on the communication path. The hash value is such a value as a quasi random number with which it is unable to reproduce the original text. In addition, it is difficult to create another message generating the same hash value.

SHA1 is also a hash function used for authentication, digital signature or the like in which falsifying of an original text during the communication can be detected by generating a 160-bit hash value from the original text with a maximum length of 2⁶⁴ or less bits and by comparing the values at both ends of the communication path. This authentication algorithm is employed also in IPsec representing conventional internet encryption communications.

It should be noted that those authentication algorithms are designed such that a secure key exchange can be carried out based on DH (Diffie-Hellman) public key distribution method, IKE (Internet Key Exchange) protocol (No. 500 of UDP) similar to IPsec or the like, and furthermore, a schedule is determined by a protocol driver program (TCPsec 15b, UDPsec 16b or the like) so that encryption/integrity authentication algorithm (logic) itself and the key set/domain therefor will be changed periodically.

As described above, in the invention disclosed in the Patent Document 1, TCP2 proposed by the inventor of this application is used, and functions of preventing data leakage, falsifying, masquerading, approach and attack can be strengthened without changing a program of an upper application. Therefore, a novel encryption system is implemented in which encryption and decryption logic are arranged on the transmitting side and on the reception side to be applied to a payload of a protocol which corresponds to TCP or UDP existing in a transport layer.

However, in the invention described in the Patent Document 1 mentioned above, TCP2 proposed by the inventors of the present application is implemented in the form of software or hardware on a personal computer. However, in order to mount such software or hardware on a personal computer, work is necessary and also, the load on the personal computer itself will be increased by mounting such software or hardware.

More specifically, in order to mount software or hardware on a personal computer, work is necessary for mounting thereof as mentioned above and also, the load on the personal computer itself will be increased. On the other hand, the encryption system using TCP2 mentioned above is a protocol for preventing data "leakage" and "falsifying", further "masquerading", "approach" or "attack" on the Internet and is utilized in the communication between the personal computer and the outside thereof.

This invention is made in view of such a problem and an object of the present invention is to realize the TCP2 function previously proposed by the inventors of the present application in the communication between the personal computer and the outside thereof using simplified means without any burden such as mounting software or hardware to the personal computer.

### DISCLOSURE OF THE INVENTION

In order to solve the above-mentioned problems and to accomplish the object of the present invention, the invention described in claim 1 is an intermediary apparatus used when carrying out communication of computerized information by adding an encryption function to a TCP or UDP protocol positioned in a transport layer and the intermediary apparatus includes: arrangement means for arranging corresponding encryption and decryption logic with an opposite apparatus thereto; protocol encryption means for encrypting and transmitting at least a payload of a protocol within packets constituting information units transmitted and received according to the encryption logic arranged by the arrangement means; and protocol decryption means for decrypting the received encrypted payload of the TCP or UDP protocol according to the decryption logic arranged by the arrangement means, characterized in that communication is carried out based on the encryption and decryption logic using the TCP or UDP protocol in the transport layer.

Also, the intermediary apparatus according to the description of claim 2 is characterized in that encryption and decryption logic which can be an arrangement candidate for the arrangement means arranging the encryption and decryption logic is stored in a memory or mounted on a circuit; and the intermediary apparatus further includes logic changing means for periodically changing the encryption and decryption logic which can be an arrangement candidate and is stored or mounted.

In the intermediary apparatus according to the description of claim 3, the arrangement means is allowed to arrange the encryption and decryption logic such that a plaintext is handled without encryption.

### BRIEF DESCRIPTION OF DRAWINGS

FIG. 1 is a block diagram showing a configuration of an embodiment of an intermediary apparatus to which the present invention is applied.
FIG. 2 is a conceptual diagram in which TCP2 is realized as a security gateway connected to a communication line which carries out encrypted communication and authentication.
FIG. 3 is a diagram showing an example of a specific communication network to which an intermediary apparatus according to the present invention is applied.
FIG. 4 is a table in which the related art technology is explained for comparison.
FIG. 5 is an explanatory diagram in which the related art technology is explained for comparison.
FIG. 6 is a diagram showing standard communication protocol stacks using IPsec and SSL in the past.
FIG. 7 is a table in which the related art technology is explained.
FIG. 8 is a diagram showing a TCP2 protocol stack proposed previously by the inventors of the present application.

### BEST MODE FOR CARRYING OUT THE INVENTION

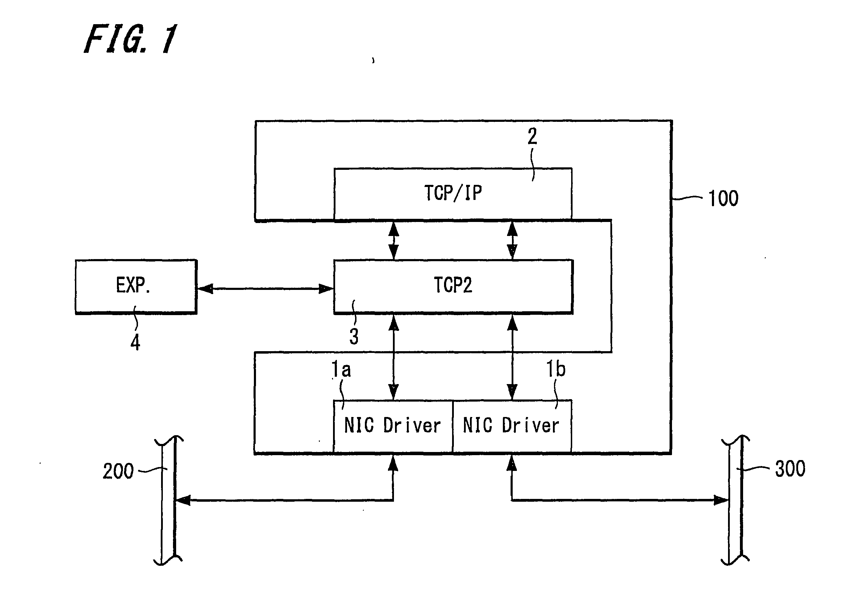

Hereinafter, the present invention will be explained with reference to the drawings and FIG. 1 is a block diagram showing a configuration of an embodiment of an intermediary apparatus to which the present invention is applied.

In FIG. 1, an intermediary apparatus 100 is an apparatus having a function equivalent to a personal computer. The intermediary apparatus 100 includes NIC (Network Interface Card) drivers 1a, 1b connected to networks 200, 300, respectively. Also, the intermediary apparatus 100 includes a network layer and a transport layer including "TCP/IP" 2 which defines for the physical layer and the data-link layer including the NIC drivers 1a, 1b a communication method for the communication while carrying out routing between any two nodes existing on the networks 200, 300.

The function of "TCP2" 3 which the inventors of the present application previously proposed may be provided between the data-link layer and the network layer. More specifically, the function of the "TCP2" 3 can be provided as software or hardware and, it is further possible to provide means for controlling the function of the "TCP2" 3, changing the encryption and decryption logic periodically and arranging such that a plaintext is handled without encryption if it is necessary, as an external function (EXP.) 4.

Accordingly, in this embodiment, TCP2 function which the inventors of the present application proposed previously is implemented in an intermediary apparatus, so that it is possible to prevent "leakage" and "falsifying", further "masquerading", "approach" or "attack" of the data on the Internet in the communication between the personal computer and the outside thereof without any burden such as installing software or hardware in the personal computer.

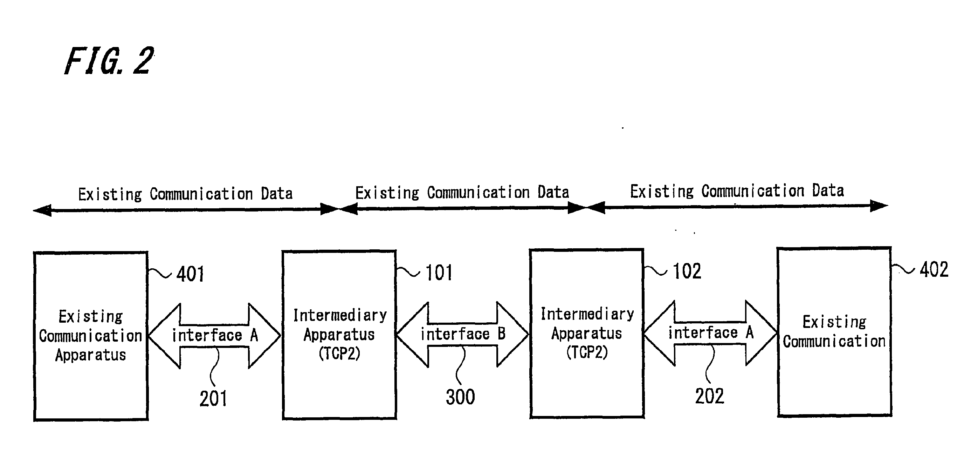

More specifically, as shown in a conceptual diagram in FIG. 2, for example, the intermediary apparatus 100 of the present invention is realized as a security gateway which connects TCP2 to the communication line that carries out encryption communication and authentication.

In FIG. 2, intermediary apparatuses 101, 102 including TCP2 do not depend on the physical interface of the communication, so that it is possible to be connected to various kinds of interfaces. Here, various kinds of communication interfaces including Ethernet, FDDI, PPP, wireless LAN and IEEE 1394 are represented as interface A (network 300) and interface B (network 201, 202).

Existing communication data is input to the intermediary apparatus 101 from the interface A, encrypted by TCP2 and output to the interface B as cryptograph data. Also, encrypted communication data is input to the intermediary apparatus 102 from the interface B, decrypted by TCP2 and output to the interface A as existing communication data. Each of the intermediary apparatuses 101 and 102 has the function of authenticating TCP2 each other when starting communication and is forced to terminate the communication in the case where the authentication is not succeeded.

In such a communication system, existing communication data are transmitted and received between the existing communication apparatus 401 and the intermediary apparatus 101 and between the existing communication apparatus 402 and the intermediary apparatus 102 respectively, but encrypted communication data are transmitted and received between the intermediary apparatuses 101 and 102, so that "leakage" and "falsifying", further "masquerading", "approach" or "attack" of the data can be prevented between the intermediary apparatuses 101 and 102.

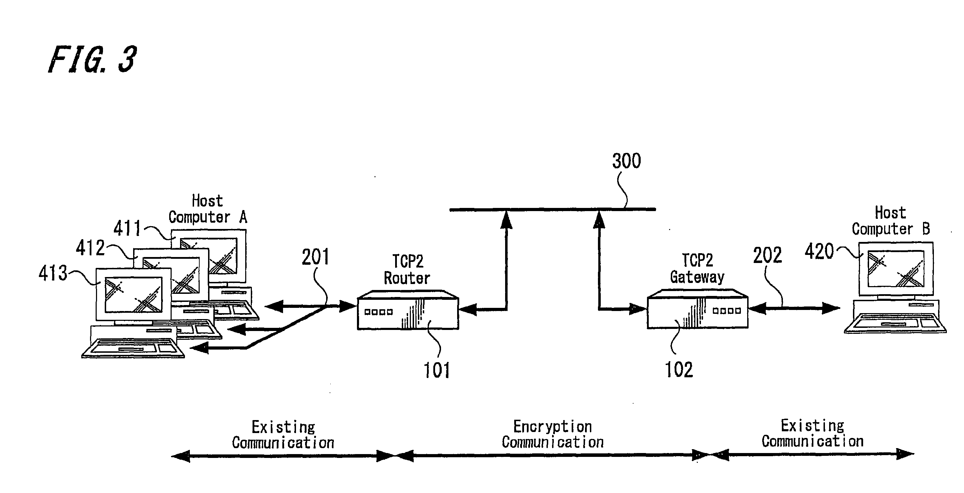

In addition, FIG. 3 shows a specific example of a communication network. As shown in FIG. 3, a plurality of personal computers 411, 412 and 413 are connected to the host computer A via a network 201 such as Ethernet or the like, forming a LAN (Local Area Network) environment. Accordingly, the intermediary apparatus 101 for carrying out connection to the external network 300 is a router in this case.

On the other hand, there is provided a single personal computer 420 as the host computer B. Accordingly, the intermediary apparatus 102 for carrying out connection to the external network 300 in this case is a gateway and connected to the personal computer 420 via a network 202, for example, Ethernet. Further, the external network 300 in this case is also connected, for example, via Ethernet.

In such a communication network, existing communication data are transmitted and received via the region of the networks 201, 202 and encrypted communication data are transmitted and received via the portion of the external network 300. It is possible to prevent "leakage" and "falsifying", further "masquerading", "approach" or "attack" of the data in the portion of the external network 300.

In this manner, an intermediary apparatus according to the present invention includes: arrangement means, used when carrying out communication of computerized information by encrypting the protocol positioned in the transport layer, for arranging corresponding encryption and decryption logic with an opposite apparatus thereto; protocol encryption means for encrypting and transmitting at least a payload of the protocol in packets as information units transmitted and received according to an encryption logic arranged by the arrangement means; and protocol decryption means for decrypting the received encrypted payload of the protocol according to the decryption logic arranged by the arrangement means, and carries out communication based on the encryption and decryption logic using the protocol in the transport layer, so that "leakage" and "falsifying", further "masquerading", "approach" or "attack" of the data on the Internet can be prevented in the communication between the personal computer and the outside thereof without any burden such as installing software or hardware in the personal computer.

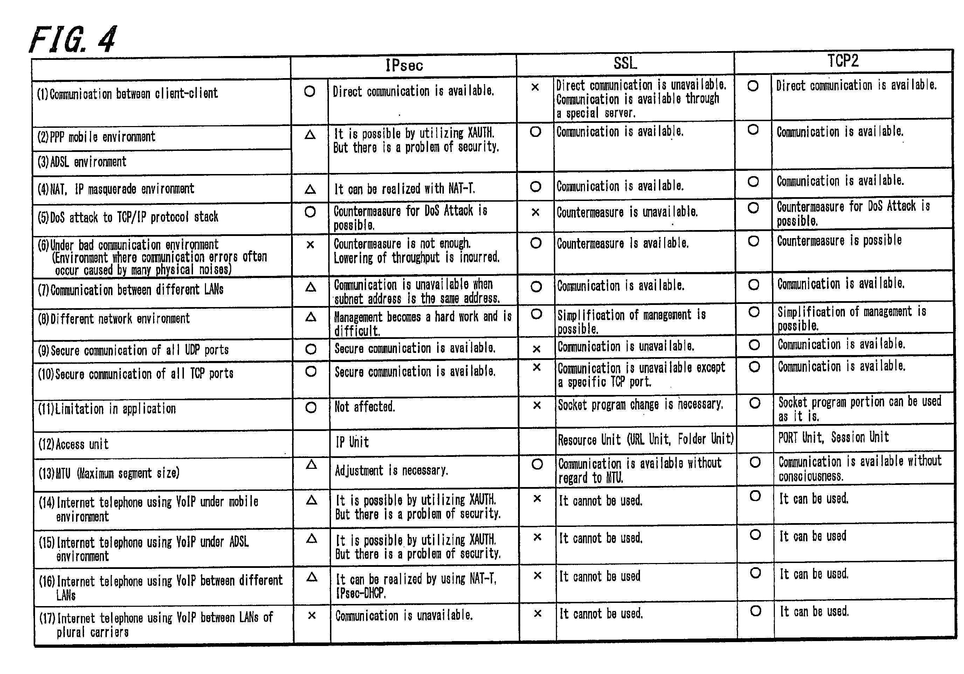

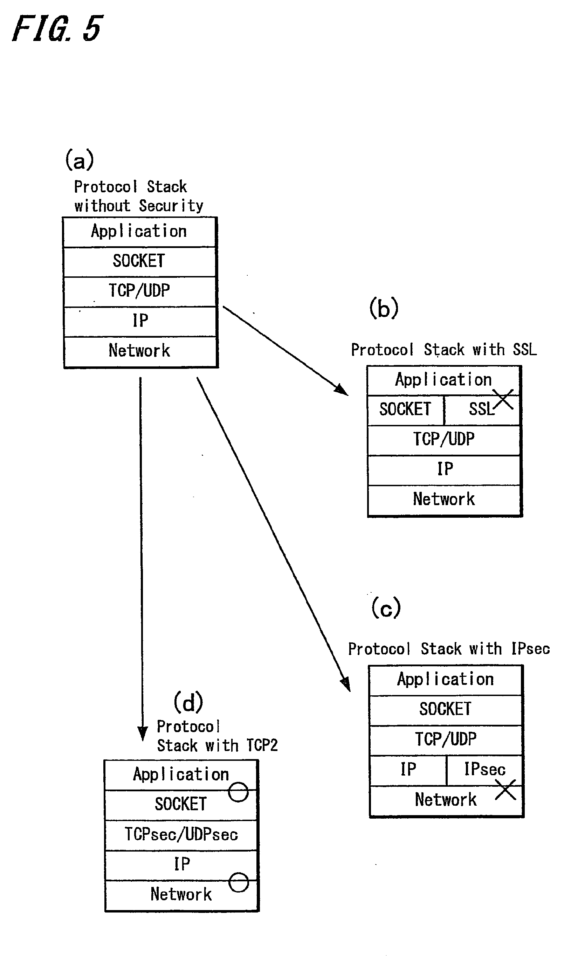

Finally, features of TCP2 of the present invention will be explained as compared with IPsec or SSL in the past based on a table 2 shown in FIG. 4 and FIG. 5. The table 2 of FIG. 4 is a table shown by adding TCP2 function to the IPsec and SSL function comparison table of the table 1 in FIG. 7 mentioned above.

As shown in table 2, various kinds of problems which IPsec and SSL have (already described in BACKGROUND ART) are completely solved by employing TCP2. For example, TCP2 completely supports communication between clients, prevents DoS attack to the TCP/IP protocol, secures communication on all the UDP ports or TCP ports, has no restriction in the application in which socket program has been changed and the like, which are difficult for SSL to support.

In addition, TCP2 completely supports a communication under an inferior environment where errors occur frequently, a communication between different LANs, a connection via a plurality of carriers, a PPP mobile environment and a communication under ADSL environment, which are difficult for IPsec to support. Further, with respect to the Internet using VoIP (Voice over Internet Protocol) under a mobile environment or ADSL environment, there are problems both for IPsec and SSL as shown in table 1 and table 2, but TCP2 of the present invention supports communications on the Internet under any of the environments.

Further, although it is difficult for IPsec and SSL to support the Internet telephone using VoIP between different LANs, TCP2 of the present invention completely supports that.

FIG. 5 is a diagram for explaining features of TCP2 and shows a case (b), a case (c) and a case (d) by comparison when a conventional SSL, IPsec, and TCP2 (TCPsec/UDPsec) of the present invention are applied to a protocol stack (a) without security, respectively.

SSL shown in the case (b) of FIG. 5, as already described, has no compatibility with an upper application, because it is provided in a socket of the session layer (fifth layer). Consequently, SSL itself has a problem as mentioned above. Also, IPsec shown in the case (c) of FIG. 5 is positioned in the network layer (third layer) and has no compatibility in the IP layer, thereby receiving several restrictions when forming a network as mentioned above.

On the other hand, TCP2 (TCPsec/UDPsec) shown in the case (d) of FIG. 5 is an encryption technology introduced in the transport layer (fourth layer) and therefore it is possible to utilize a socket directly when seen from the application and further to utilize also an IP directly when seen from the network, so that there is no restriction when forming a network.

As described above, the intermediary apparatus of the present invention uses TCP2 previously proposed by the inventors of the present application and has an extremely high security function particularly with respect to data leakage, falsification, masquerading, approach and attack, when compared with existing encryption process system.

It should be appreciated that the present invention is not limited to the embodiments explained above and various other embodiments are to be included in the present invention described in the claims without departing from the scope thereof.

### DESCRIPTION OF REFERENCE NUMERALS

1a, 1b, 11···NIC driver, 2···TCP/IP, 3···TCP2, 4···external circuit, 12···ARP on CP, 13···IP emulator, 13a···IP on CP, 13b··· IPsec on CP, 14a···ICMP, 14b···IGMP, 15···TCP, 16···UDP, 17··· socket interface, 100, 101, 102···intermediary apparatus, 200, 201, 202, 300 ··· network, 401, 402 ··· existing communication apparatus, 411, 412, 413, 420···personal computer

## Claims

1. An intermediary apparatus used when carrying out communication of computerized information by adding an encryption function to a TCP or UDP protocol positioned in a transport layer, the intermediary apparatus comprising:
arrangement means for arranging corresponding encryption and decryption logic with an opposite apparatus thereto;
protocol encryption means for encrypting and transmitting at least a payload of the protocol in packets as information units transmitted and received according to the encryption logic arranged by the arrangement means; and
protocol decryption means for decrypting the received encrypted payload of the TCP or UDP protocol according to the decryption logic arranged by the arrangement means, wherein
communication is carried out based on the encryption and decryption logic using the TCP or UDP protocol of the transport layer.

2. The intermediary apparatus according to claim 1, wherein
encryption and decryption logic which can be an arrangement candidate according to the arrangement means for arranging the encryption and decryption logic is stored in a memory or implemented on a circuit; and logic changing means for periodically changing the encryption and decryption logic stored or implemented which can be an arrangement candidate is further included.

3. The intermediary apparatus according to claim 1 or 2, wherein
the arrangement means for arranging the encryption and decryption logic is allowed to handle a plaintext without encryption in connection with the encryption and decryption logic.
